(19) Europäisches Patentamt

European Patent Office

Office européen des brevets

(11) Publication number: **0 405 854 A2**

# EUROPEAN PATENT APPLICATION

(21) Application number: 90306844.3

(22) Date of filing: 22.06.90

(51) Int. Cl.5: **G05D 17/02**

(30) Priority: 26.06.89 JP 162938/89

(43) Date of publication of application:
**02.01.91 Bulletin 91/01**

(84) Designated Contracting States:
**CH DE GB LI**

(71) Applicant: **SEIKO INSTRUMENTS INC.**
**31-1, Kameido 6-chome Koto-ku**
**Tokyo 136(JP)**

(72) Inventor: **Tsukada, Nobuo, c/o Seiko**
**Instruments Inc.**
**31-1 Kameido 6-chome, Koto-ku**
**Tokyo(JP)**

(74) Representative: **Caro, William Egerton et al**
**J. MILLER & CO. Lincoln House 296-302 High**
**Holbornorn**
**London WC1V 7JH(GB)**

(54) Ultrasonic motor.

(57) The invention provides an ultrasonic motor utilising a travelling wave generated in a vibrator (1) for rotating a movable member (3), in which the vibrator is provided on one surface with a piezoelectric element (2) and on an opposed surface with comb-like projections (1a) arranged in the circumferential direction, fan-shaped electrode patterns (2a to 2d) being provide on the piezoelectric element at regular intervals in the circumferential direction, and in which the movable member is resiliently biassed into contact with the projections. The number of the projections and the number of the electrode patterns has no common divisor.

FIG. 2

# ULTRASONIC MOTOR

This invention relates to an ultrasonic motor.

A conventional ultrasonic motor consists of a vibrator provided on one surface thereof with a piezoelectric element bonded thereto and provided on an opposite surface thereof with comb-like projections arranged in a circumferential direction, and a movable member engaged under pressure with an upper surface of the comb-like projections of the vibrator. In such an ultrasonic motor, an electric signal is applied to the piezoelectric element to generate a travelling wave in the vibrator and rotate the movable member by utilising the lateral displacement of this wave, and the comb-like projections play a role of amplifying the displacement without exerting any influence upon the travelling wave in the vibrator.

In such an ultrasonic motor, the efficiency is increased by the comb-like projections provided on the vibrator but it varies due to the positional relation between the comb-like projections and electrode patterns on the piezoelectric element.

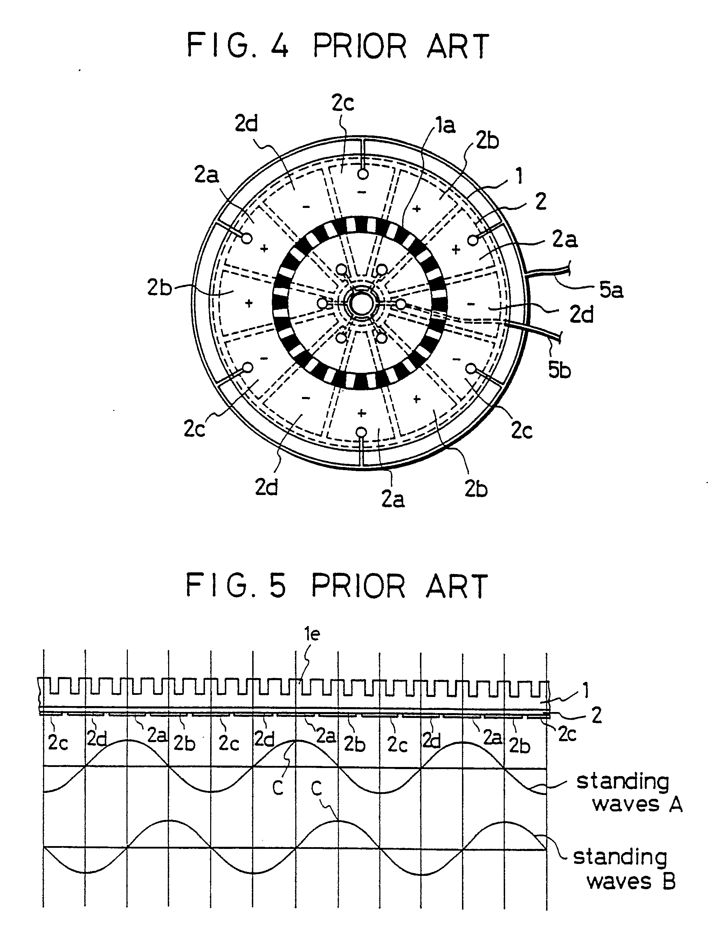

For example, referring to Figure 4, which shows an known ultrasonic motor, a vibrator 1 is provided with comb-like projections 1a shown hatched. A piezoelectric element 2 is provided on a rear surface thereof with twelve identical fan-shaped electrode patterns 2a to 2d spaced regularly in the circumferential direction. Pairs of adjacent electrode patterns 2a, 2b are polarised positively, while other pairs of adjacent electrode patterns 2c, 2d are polarised negatively. The lead wires 5 attached to these electrode patterns 2a to 2d are arranged with the lead wires attached to the alternative electrode patterns 2a, 2c bundled and designated 5a, while the lead wires attached to the alternate electrode patterns 2b, 2d are bundled and designated 5b, signals which have a 90° time phase difference being applied to the lead wires 5a, 5b. Consequently, a travelling wave occurs in the vibrator 1. Although this wave is a travelling wave, it is a combination of the standing waves in lead wire group 5a and in the lead wire group 5b.

The details of these standing waves are illustrated in Figure 5, in which the standing waves occurring in the electrode patterns 2a, 2c, and 2b, 2d are designated by the letters A and B, respectively. The number of the projections on the vibrator 1 is twenty-four, and the vibrator 1 is bonded to the piezoelectric element 2 so that the centre lines of certain of the projections 1e and those of the electrode patterns 2a to 2d are aligned. In this case, the peaks C (twelve positions) of the standing wave and the centre lines of the projections 1e are aligned. Accordingly, the bending resistance of the vibrator 1 is high, and the flexure thereof is small.

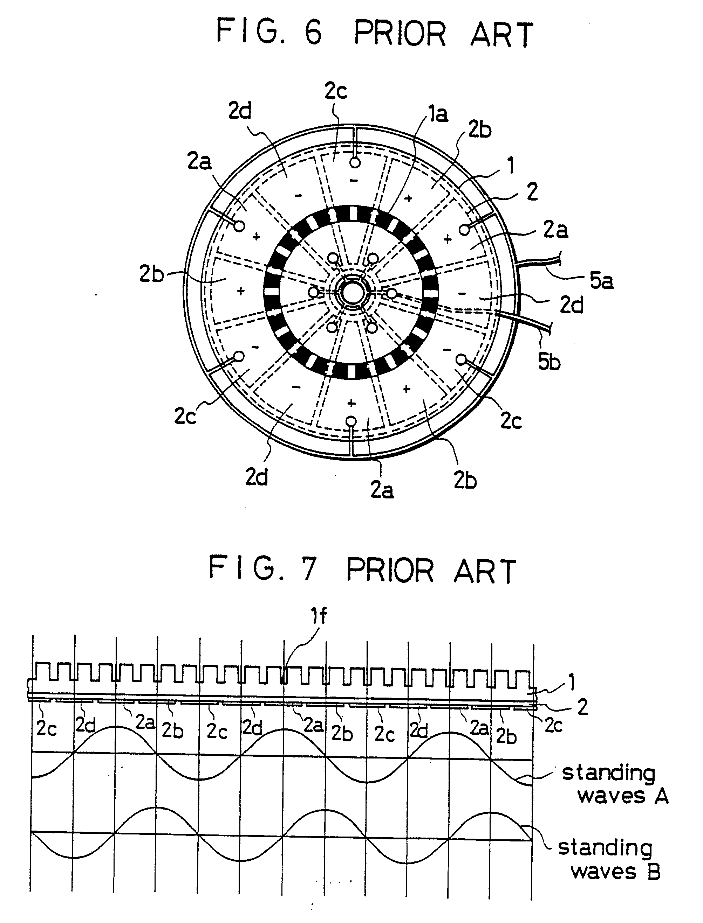

On the other hand, in a vibrator bonded to a piezoelectric element so that the centre lines of recesses 1f in the comb-like projections and those of the electrode patterns 2a to 2d are aligned as shown in Figure 6 and 7, the peaks C (twelve positions) of the standing waves are aligned with the centre lines of the recesses 1f. Accordingly, the bending resistance of this vibrator becomes low, so that the vibrator necessarily bends substantially in use.

As is clear from the above, a conventional ultrasonic motor has the problem that the efficiency thereof varies greatly in dependence upon the relative disposition of the vibrator 1 and the piezoelectric element 2 when the two parts are bonded together.

It is an object of the present invention to provide a ultrasonic motor whose efficiency is not influenced by a difference in the bonding position of the piezoelectric element in relation to the vibrator.

According to the present invention, there is provided a ultrasonic motor utilising a travelling wave generated in a vibrator for rotating a movable member in which the vibrator is provided on one surface thereof with a piezoelectric element and on an opposed surface with comb-like projections arranged in the circumferential direction, fan-shaped electrode patterns being provided on the piezoelectric element at regular intervals in the circumferential direction, and in which the movable member is resilient biassed into contact with the comb-like projections, characterised in that the number of the electrode patterns and the number of the comb-like projections have no common divisor.

In a preferred embodiment, the number of electrode patterns is a multiple of four. For example, the number of electrode patterns may be twelve, while the number of comb-like projections may be twenty-five.

In an ultrasonic motor according to the invention, as described below, centre lines of the comb-like projections and centre lines of the electrode patterns are not aligned over a full circumference, i.e. the centre lines of the electrode patterns and those of the projections deviate from each other gradually in the circumferential direction of the piezoelectric element and vibrator. Therefore, the intensity of the standing wave in one part varies in some cases but the intensity of a synthesised travelling wave is levelled. Accordingly, a variation in the performance of the parts in dependence upon the relative disposition the piezoelectric element and vibrator may be avoided.

The invention is described further, by way of example, with reference to the accompanying drawings, in which:

Figure 1 is sectional view of an ultrasonic motor according to the present invention;

Figure 2 illustrates the positional relation between electrodes and projections on a vibrator in the ultrasonic motor of the present invention;

Figure 3 illustrates standing waves generated in the vibrator in the present invention and their relation to the projections; and

Figures 4 to 7 illustrate a prior art ultrasonic motor, in which the efficiency varies according to the position of the electrodes in relation to the projections on the vibrator.

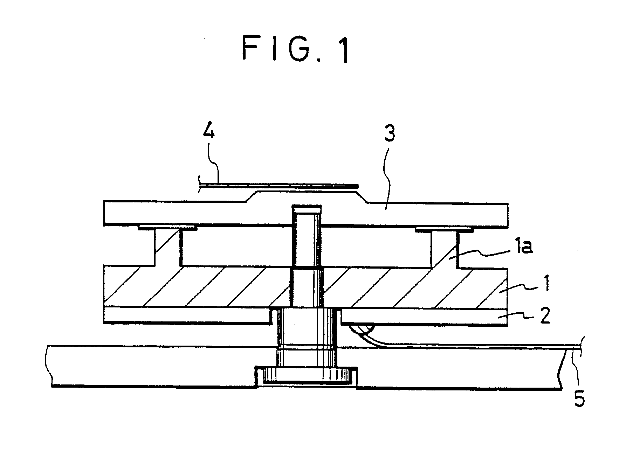

An embodiment of the present invention will now be described with reference to the drawings. Figure 1 is a sectional view of an ultrasonic motor according to the present invention, in which a vibrator 1 has a piezoelectric element 2 bonded thereto on one side, and has comb-like projections 1a formed thereon on another opposed, side. A movable member 3 is engaged with the vibrator 1 by the force of a pressure spring 4. Lead wires 5 are soldered to electrodes on a rear surface of the piezoelectric element 2. When an electric current is applied from the lead wires 5 to the piezoelectric element 2, a travelling wave occurs in the vibrator 1 whereby the movable member 3 is rotated.

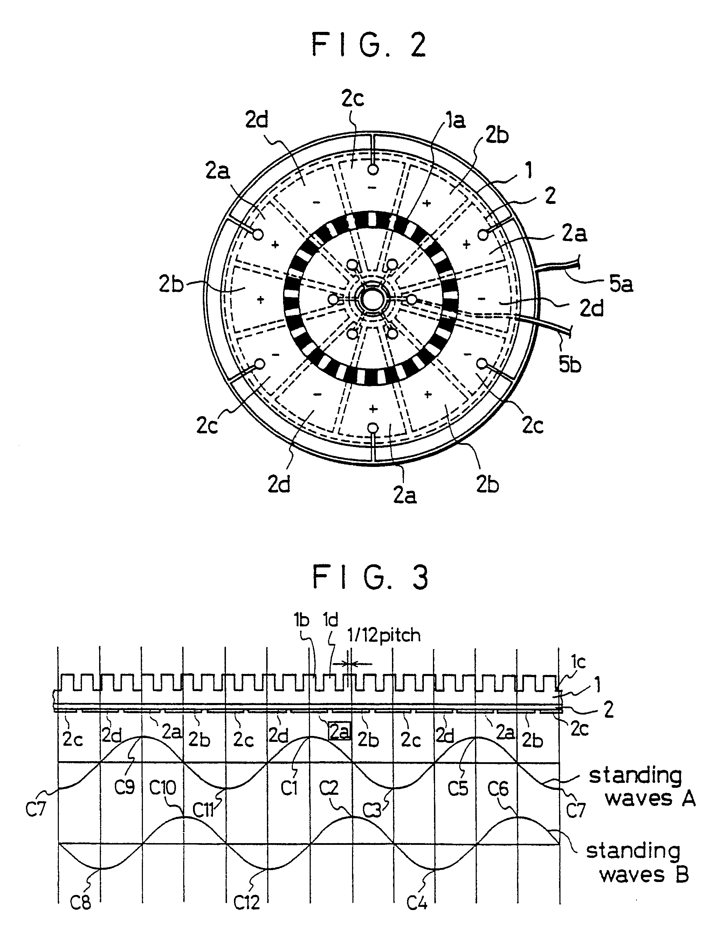

Figure 2 shows the positional relation between the electrodes of the piezoelectric element 2 and the comb-like projections 1a of the vibrator 1. The comb-like projections 1a of the vibrator 1 are shown hatched. The piezoelectric element 2 is provided on its rear surface with twelve identical fan-shaped electrode patterns 2a to 2d spaced at regular intervals in a circumferential direction of the motor. The pairs of adjacent electrode patterns 2a, 2b are positively polarised, and the other pairs of adjacent electrode patterns 2c, 2d are negatively polarized. The lead wires 5 attached to the electrode patterns 2a to 2d are arranged with the lead wires attached to the alternate electrode patterns 2a, 2c bundled and designated 5a, while the lead wires attached to the other alternate electrode patterns 2b, 2d are bundled and designated 5b, signals which have a 90° time phase difference being applied to the lead wires 5a, 5b. Consequently, a travelling wave occurs in the vibrator 1. Although this wave is a travelling wave, it is a combination of the standing wave in the lead wire group 5a and that in the lead wire group 5b.

The details of these standing waves will now be described with reference to Figure 3. The standing waves occurring in the electrode patterns 2a, 2c and 2b, 2d are designated by the letters A and B, respectively. The number of the projections of the vibrator 1 is twenty-five. For example, in the case where the vibrator 1 is bonded with the piezoelectric element 2 so that the centre line of one electrode pattern (designated by boxed 2a) out of the electrode patterns 2a and that of a projection 1b out of the comb-like projections 1a are aligned, a peak C1 of the standing wave A is aligned with the centre line of the projection 1b but a peak C2 of the standing wave b deviates from the centre line of a corresponding projections by 1/12 pitch. A peak C3 then deviates from the centre line of a corresponding projection by 2/12 pitch, a peak C4 deviating from the centre line of a corresponding projection by 3/12 pitch, and so on until a peak C7 is aligned with the centre line of a recess 1c and a peak C8 deviates from the centre line of a corresponding recess by 1/12 pitch. Thus, the rigidity or bending resistance of the vibrator in the region of the peaks of the standing waves varies little by little in the circumferential direction thereof.

When the portions of the piezoelectric element 2 and the vibrator 1 at which the two are bonded together are shifted a little, the positional relation mentioned above changes a little but, if these parts are shifted by as much as 1/12 pitch, a projection 1d and the peak C2 become aligned, so that the condition of the standing waves effectively returns to that shown in Figure 2. Even when the bonding arrangement of the piezoelectric element 2 is thus varied arbitrarily, the deviation of a projection from a peak of a standing wave occurs every time only a 1/12 pitch deviation of the bonding portion of the piezoelectric element occurs. Moreover, this is caused by the distribution of the intensity of the standing waves. Since the intensity of a travelling wave consisting of a combination of all the standing waves is levelled, the characteristics of the ultrasonic motor do not vary substantially.

In the described embodiment, the number of the projections is set to be twenty-five with respect to a number twelve of the electrode patterns. Even when different numbers of projections and electrode patterns are employed, completely the same effect can be obtained as long as the numbers have no common divisor.

According to the present invention as described above, a piezoelectric element is provided with fan-shaped electrode patterns, the number of which is a multiple of 4, spaced from one another at regular intervals in the circumferential direction. The number of the electrode patterns and that of the comb-like projections of a vibrator have no common divisor and so the efficiency of the ultrasonic motor is not influenced by a difference in the bonding disposition of the piezoelectric element, and an ultrasonic motor having parts with little variation in quality and constant performance can be obtained.

## Claims

1. An ultrasonic motor utilising a travelling wave generated in a vibrator (1) for rotating a movable member (3), in which the vibrator is provided on one surface with a piezoelectric element (2) and on an opposed surface with comb-like projections (1a) arranged in the circumferential direction, fan-shaped electrode patterns (2a to 2d) being provided on the piezoelectric element at regular intervals in the circumferential direction, and in which the movable member (3) is resiliently biassed into contact with the comb-like projections, characterised in that the number of the electrode patterns and the number of the comb-like projections have no common divisor.

2. An ultrasonic motor according to claim 1 characterised in that the number of electrode patterns is a multiple of four.

3. An ultrasonic motor as claimed in claim 2 characterised in that the number of electrode patterns is twelve.

4. An ultrasonic motor as claimed in claim 1, 2 or 3 characterised in that the number of comb-like projections is twenty five.

5. An ultrasonic motor as claimed in claim 1, 2, 3 or 4 characterised in that a centre line of one of the electrode patterns is aligned with a centre line of one of the comb-like projections.

6. An ultrasonic motor utilising a travelling wave generated in a vibrator (1) for rotating a movable member (3) characterised by: a vibrator (1) provided on one surface thereof with a piezoelectric element (2); comb-like projections (1a) arranged alternatively in the circumferential direction thereof on the other surface of said vibrator; a movable member (3) provided on said vibrator; a pressure regulator (4) provided on said movable member for generating suitable contact pressure between said movable member and said vibrator; and fan-shaped electrode patterns (2a to 2d) provided on one surface of said piezoelectric element, the number of which is a multiple of four, arranged at regular intervals in the circumferential direction thereof, wherein the number of said fan-shaped electrode patterns and that of said comb-like projections of said vibrator have no common divisor with respect to each other.

# F I G. 1

# F I G. 2

# F I G. 3

# FIG. 4 PRIOR ART

# FIG. 5 PRIOR ART

standing waves A

standing waves B

7

# FIG. 6  PRIOR ART

# FIG. 7  PRIOR ART

standing waves A

standing waves B